# DEMANDE DE BREVET EUROPEEN

(11) **EP 0 549 430 A1**
(43) Date de publication de la demande: **30.06.1993**
(21) Numéro de dépôt: 92403455.6
(22) Date de dépôt: 17.12.1992
(51) Int. Cl.: H02K 1/27

(54) **Rotor à aimants permanents et machine magnéto-dynamique, comme un moteur sans collecteur, équipée d'un tel rotor**

(30) Priorité: 20.12.1991 FR 9115921
(71) Demandeur: VALEO SYSTEMES D'ESSUYAGE, 78180 Montigny-Le-Bretonneux (FR)
(72) Inventeur: Garcia, José, F-78310 Maurepas (FR)
(74) Mandataire: Gamonal, Didier

(57) **Abrégé**

La présente invention concerne un rotor tournant pour machine magnéto-dynamique. Le rotor comporte un arbre tournant (6) et un corps rotorique (5) dont la surface extérieure est un cylindre. L'invention se caractérise en que le rotor comporte une pluralité de tuiles aimantées (2,8,7,9) appliquées contre le corps rotorique (5), et en ce que les extrémités des tuiles sont maintenues contre la surface extérieure du corps rotorique par des pièces annulaires (3,4).

## Description

La présente invention concerne un rotor à aimants permanents et une machine magnéto-dynamique, comme un moteur sans collecteur, équipée d'un tel rotor. Le rotor de l'invention est particulièrement convenable pour constituer le rotor d'un moteur à commutation électronique.

Dans l'art antérieur, on a déjà proposé des montages constitués d'un arbre tournant sur lequel est fixé un corps rotorique réalisé en un matériau magnétique donné, et par dessus lequel on a collé des aimants permanents constitués par des secteurs cylindriques. Dans le plan perpendiculaire à l'axe de l'arbre tournant, on peut compter autant d'aimants permanents que l'on souhaite constituer de pôles inducteurs. Chaque aimant pemanent est, après son montage sur l'inducteur, passé dans un appareil de magnétisation qui lui imprime une magnétisation destinée à constituer sur une première face de l'aimant un pôle d'une polarité donnée et sur la face opposée radialement, une polarisation du signe opposé. Chaque aimant permanent est en fait constitué par une tuile dont une face externe, après montage sur le corps rotorique présentée une polarité magnétique donnée.

Cependant selon les applications, les aimants permanents sont réalisés par agglomérat ou par frittage, dans des conditions particulières, de poudres de matériaux magnétiques à hautes performances. Par exemple les ferrites présentent un certain caractère de fragilité qui est préjudiciable au montage. Dans l'art antérieur, on a proposé déjà des solutions de montage d'aimants permanents en forme de secteurs de cylindre sur un corps rotorique adapté, présentant une partie en saillie qui vient s'adapter dans une rainure correspondante de l'aimant permanent. Cependant, quand il est réalisé en un matériau cassant, une telle rainure de direction longitudinale parallèle à l'axe tournant, est un point fragile. En particulier, lors de l'insertion il est très possible que de petits éclats de ferrites cassent et tombent dans le fond de carcasse de la machine dynamoélectrique, ce qui constitue un risque de pollution et donc de réduction de la qualité de la fabrication.

Pour éviter cet inconvénient, on a aussi proposé une technique de collage de l'aimant permanent sur le corps rotorique. Une colle comme une colle à chaud est posée entre l'aimant permanent et le corps rotorique. Puis l'aimant permanent est appliqué en position sur le corps rotorique. Cette technique, qui évite de travailler l'aimant permanent au point de vue mécanique, présente deux inconvénients majeurs. Tout d'abord, la colle peut fluer lors de l'application d'une pression de collage sur l'aimant permanent en dehors de la zone collée. Ceci constitue un risque de pollution du rotor ou inducteur.

Ensuite, malgré la bonne qualité des colles, le rotor étant tournant, l'aimant permanent est soumis à une force centrifuge qui peut conduire dans certaines conditions à une rupture de la liaison entre l'aimant permanent et le corps rotorique. De ce fait, le moteur ou la machine magnéto-dynamique qui en sont munis peuvent être défaillants.

Pour porter remède à ces inconvénients de l'art antérieur, la présente invention concerne un rotor pour machine magnéto-dynamique, du type comportant un corps rotorique muni d'au moins une surface d'appui, du type comportant une pluralité d'aimants permanents en forme de tuiles dont une face est destinée à venir s'appuyer sur ladite surface d'appui, les tuiles étant maintenues contre la surface d'appui du corps rotorique par au moins un anneau de maintien, dans au moins une zone, l'extrémité de chaque tuile comportant un logement déstiné à recevoir une première partie cylindrique de l'anneau de maintien, la première partie cylindrique de l'anneau de maintien étant fixée à la périphérie d'une seconde partie de la pièce annulaire en forme de disque et servant à maintenir la pièce annulaire de maintien en rotation par rapport à l'axe de l'arbre tournant. L'invention se caractérise en ce que le disque comporte une pluralité d'ergots destinés à pénétrer dans des logements correspondants de l'arbre tournant, ou du corps rotorique.

Selon un autre aspect, l'invention concerne un rotor pour machine magnéto-dynamique, du type comportant un corps rotorique muni d'au moins une surface d'appui, du type comportant une pluralité d'aimants permanents en forme de tuiles dont une face est destinée à venir s'appuyer sur ladite surface d'appui, les tuiles étant maintenues contre la surface d'appui du corps rotorique par au moins un anneau de maintien, dans au moins une zone. L'invention se caractérise en ce que les tuiles sont de forme parallélépipèdique dont les bords longitudinaux présentent au moins une partie qui n'est pas alignée sur l'axe de l'arbre de rotation de façon à réduire l'effet d'encoche.

Selon un autre aspect, l'invention concerne un rotor pour machine magnéto-dynamique, du type comportant un corps rotorique muni d'au moins une surface d'appui, du type comportant une pluralité d'aimants permanents en forme de tuiles dont une face est destinée à venir s'appuyer sur ladite surface d'appui, les tuiles étant maintenues contre la surface d'appui du corps rotorique par au moins un anneau de maintien, dans au moins une zone. L'invention se caractérise en ce que au moins une des extrémités des tuiles dépasse du corps rotorique de façon à présenter un logement annulaire entre la face intérieure de chaque tuile et l'arbre de rotation pour y loger un capteur de position angulaire du rotor, comme un capteur à effet Hall, le capteur étant fixe par rapport au rotor.

L'invention concerne aussi une machine magnétodynamique équipée d'un tel rotor.

D'autres avantages et caractéristiques de la présente invention seront mieux compris à l'aide de la description et des dessins qui sont :
- la figure 1 : une vue représentant un premier mode de réalisation de la présente invention,
- la figure 2 : une vue de face du rotor de la figure 1,
- la figure 3 : un détail d'un mode de réalisation d'un rotor selon l'invention,
- la figure 4 : un détail d'un mode de réalisation du rotor de l'invention,
- la figure 5 : une vue de face d'un autre mode de réalisation d'un rotor selon l'invention ;
- les figures 6a à 6d : des géométries de tuiles pour rotor selon l'invention ;
- les figures 7a à 7c : un autre mode de réalisation selon l'invention.

L'invention s'applique très favorablement au cas où chaque aimant permanent est constitué par une tuile dont une face s'applique sur une zone d'appui correspondante du corps rotorique.

Dans une forme de réalisation, la tuile est constituée par un secteur annulaire de cylindre. Dans un autre mode de réalisation, la tuile est constituée par un parallélépipède.

D'autre part, les côtés des tuiles destinés à se correspondre deux à deux peuvent ne pas être alignés sur l'axe de rotation de l'induit, ni sur une génératrice du cylindre autour duquel les tuiles sont disposées.

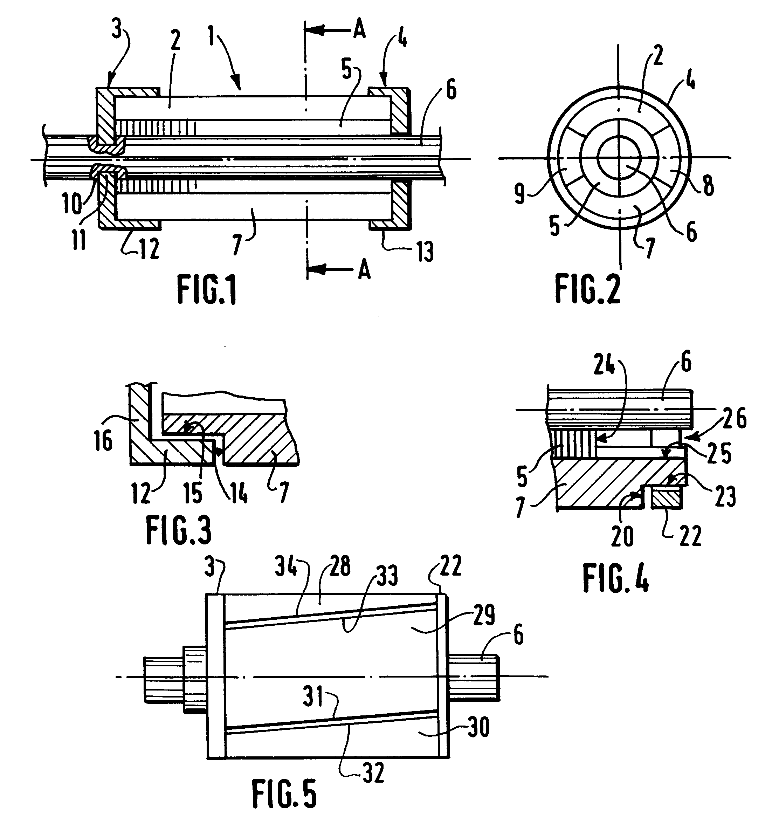

A la figure 1, le rotor 1 est destiné à un moteur sans collecteur. Le rotor est constitué autour d'un arbre tournant 6 sur lequel est monté un corps rotorique 5. Le corps rotorique 5 peut être constitué par un empilement de tôles en fer au silicium. Dans un mode de réalisation, ces tôles proviennent de la découpe du puits statorique dans un stator non représenté au dessin et qui n'est pas directement concerné par l'invention. Le puits statorique reçoit le rotor après son introduction.

Le corps rotorique est de forme cylindrique allongée, ses génératrices étant parallèles à l'axe de l'arbre tournant 6. La périphérie ou surface périphérique du corps rotorique 5 constitue une surface d'appui sur laquelle on dispose des aimants permanents en forme de secteurs annulaires de cylindre, respectivement 2 et 7 à la figure 1 et de plus, 8 et 9 sur la coupe de la figure 2. Dans ce mode de réalisation, les aimants permanents sont réalisés en quatre tuiles constituant donc vers l'extérieur deux paires de pôles magnétiques. Les tuiles 2, 8, 7, 9 sont posées sur le corps rotorique par leurs surfaces intérieures. Les extrémités, représentées à la figure 1, des tuiles sont maintenues contre le corps rotorique par deux anneaux de maintien ou frettes, respectivement 3 et 4.

Dans un mode de réalisation, l'un des anneaux de maintien, par exemple l'anneau 3, comporte une première partie cylindrique 12 d'axe, l'axe de l'arbre tournant 6. La première partie cylindrique 12 est maintenue fixe en rotation par rapport à l'axe de l'arbre tournant 6 par une seconde partie de la pièce annulaire en forme de disque 11, doté de points d'ancrage 110 dans des logements 10 prévus à cet effet dans l'arbre tournant 6.

Dans un autre mode de réalisation, les ancrages 110 sont dans une direction perpendiculaire au plan du disque 11 et pénètrent dans des logements correspondants dans le corps rotorique 5.

Dans un autre mode de réalisation, représenté à la figure 1 aussi pour la seconde extrémité de l'inducteur 1-7, la pièce annulaire 4 est constituée par une première partie cylindrique 13, reliée à une seconde partie en forme de disque percé d'un trou de passage de l'arbre tournant. De ce fait, par le serrage des pièces annulaires 3 et 4, les extrémités des tuiles 2,8, 7 et 9 sont maintenues fixes sur le corps rotorique 5 malgré l'application d'une force centrifuge lors de la rotation de l'inducteur à aimants permanents.

Dans le mode de réalisation de la figure 1, les pièces annulaires 3 et 4 sont d'un diamètre supérieur au diamètre rotorique. Comme il faut réduire l'entrefer avec le stator, ou bien les ferrites dépassent de part et d'autre du stator de façon à ce que la partie statorique soit entièrement occupée par la partie active de la ferrite, ou bien on réalise une réduction du diamètre local de l'extrémité des tuiles de façon à y loger la première partie cylindrique de la pièce annulaire de maintien. Ceci est représenté dans les modes de réalisation des figures 3 et 4, qui sont des détails de tels inducteurs à aimants permanents.

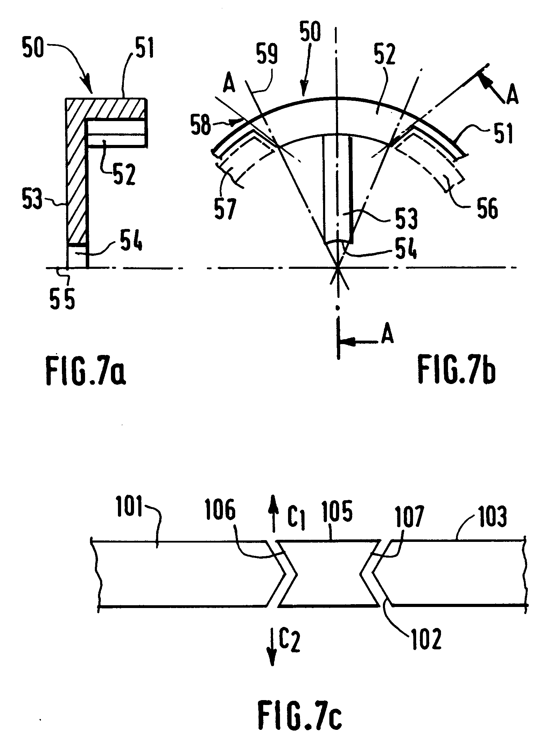

Dans une variante, représentée à la figure 7, la frette 50 est représentée partiellement en coupe à la figure 7a selon la ligne A-A, et en vue de face partielle à la figure 7b. La pièce 50 comporte un anneau de frettage 51 et un espaceur 52.

Dans un mode de réalisation, la pièce annulaire 50 comporte aussi au moins un bras 53. L'extrémité du bras 53 est dotée d'un moyen 54 de fixation à l'arbre du rotor ou au corps rotorique, non représentés.

A la figure 7b, on a représenté la ligne A-A de coupe qui passe par le bras 53 et contourne l'espaceur 52. L'espaceur présente une face 58 dont l'inclinaison fait un angle A par rapport au rayon 59 liant le coin inférieur de l'espaceur 52 à l'axe 55 de rotation.

Cet angle A non nul permet d'engendrer une face d'appui sur la face correspondante de la tuile 57 ou 56 montée sur l'inducteur et représentée en tirets à la figure 7b. Ainsi on améliore le calage et la fixation des tuiles réalisant les aimants permanents. Les anneaux de mantien constituent ainsi des gabarits de montage des tuiles.

En particulier, la taille du bord longitudinal de chaque tuile selon l'angle A précité est souvent réalisée pour permettre le détalonnage de la tuile de façon à conformer les lignes de flux selon une géométrie désirée. En particulier, selon la quantité de matière retirée et la forme du détalonnage, on peut réaliser des espaceurs présentant des formes différentes, comme celle représentée à la figure 7c.

A la figure 7c, on a représenté en coupe un détail de réalisation d'un rotor à tuiles détalonnées, dans une Représentation "dépliée". Le bord longitudinal 100 et 102 de chaque tuile 101 et 103 présente deux enlèvements de matière du côté intérieur CI et du côté extérieur C2. Ces enlèvements de matière peuvent présenter des formes différentes.

L'espace 104 entre les bords longitudinaux 100 et 102 des deux tuiles 101 et 103 est occupé, au moins au niveau des anneaux de frettage par un espaceur 105 dont les bords 106 et 107 présentent une forme adaptée. En particulier, ces bords 106 et 107 peuvent être réalisés en un matériau élastique de façon à s'adapter à des détalonnages de formes complexes.

A la figure 3, la tuile 7 présente au moins un logement qui court tout le long de l'extrémité en forme d'arc de la ferrite. Ce logement est constitué par des faces 14 et 15 obtenues lors du moulage de la surface extérieure de la ferrite si la tuile est réalisée en un tel matériau magnétique. La réduction du diamètre 14 de la tuile est d'épaisseur au moins égale à l'épaisseur de la première partie cylindrique 12 de la pièce annulaire de maintien 12,16. La partie cylindrique 12 de la pièce 12,16 est complétée par une seconde partie en forme de disque 16, analogue à la partie 11 du mode de réalisation de la figure 1.

Dans un mode de réalisation non représenté, la seconde partie en forme de disque 16 est remplacée par une partie en forme de roue à rayons, qui comporte un rayon à chaque interface entre deux tuiles. Dans un tel mode de réalisation, le bord de tuile qui se raccorde à l'extrémité en forme d'arc de la tuile est en plus percé d'un logement qui constitue un décrochement de passage du rayon de la partie en forme de roue à rayons. Chaque rayon est ensuite réuni et fixé par exemple sur une pièce de fixation à l'arbre tournant ou encore au corps rotorique.

A la figure 4, on a représenté un mode de réalisation du rotor qui permet de ménager en particulier un accès à un espace vide 26 entre l'arbre tournant 6, le fond 24 du corps rotorique 7 et la surface cylindrique intérieure 25 de la tuile 7. Dans ce mode de réalisation, la pièce annulaire de maintien de l'extrémité des tuiles est constituée simplement par un anneau 22 qui se loge dans un logement de faces 23 et 20 à l'extrémité des tuiles comme la tuile 7. De ce fait, on dispose d'un accès parallèlement à l'axe de l'arbre tournant 6 pour loger dans l'espace vide 26 une pièce comme par exemple un organe de mesure de la position instantanée de la tuile 7 lors de sa rotation autour de l'axe de l'arbre 6.

Dans ce mode de réalisation particulièrement avantageux, l'extrémité de chaque tuile est en porte-à-faux au-dessus de l'espace vide 26. De ce fait, il n'y a pas besoin d'ajouter d'indication particulière de la position angulaire de l'inducteur puisque cette indication est constituée par la succession des tuiles elle-même. En particulier, quand l'organe de mesure de la position angulaire de l'inducteur cmporte au moins un capteur à effet Hall, fixé par rapport à l'inducteur tournant, la succession de pôles N et S des tuiles permet de mesurer précisément cette position angulaire quand la partie active du capteur à effet Hall (non représenté) est logé dans l'espace vide 26.

A la figure 5, on a représenté un mode de réalisation d'un inducteur à aimants permanents dont les secteurs cylindriques sont de forme sensiblement en losange. Dans ce mode de réalisation, le bord longitudinal d'une tuile est constituée par une ligne qui, dans une vue longitudinale, n'est pas co-linéaire à l'axe de l'arbre de rotation 6. Les bords longitudinaux en vis à vis des tuiles, respectivement 32 et 31 pour la tuile 30 et la tuile 29 et 33 et 34 pour les tuiles 29 et 28, sont ici constitués par des droites obliques.

Une telle disposition permet que les changements de polarité magnétique, devant une encoche statorique remplie par les fils rectilignes d'un bobinage induit au stator (non représenté au dessin), ne se fassent pas en même temps sur toute la longueur du bobinage. On réduit ainsi l'effet d'encoche. En particulier, l'inclinaison des bords 31-34 est telle que le décalage entre deux extrémités de chaque bord correspondant au plus au pas d'encoche. Ce mode de réalisation évite d'avoir à réaliser des stators dont le bobinage comporte une partie active qui n'est pas alignée sur l'axe de rotation du rotor comme c'est souvent le cas dans l'état de l'art pour résoudre le problème du couple réluctant (effet d'encoche).

Dans un autre mode de réalisation non représenté, les lignes 31 à 34 peuvent être de formes variées permettant de corriger tout effet magnéto-dynamique mesuré sur un moteur dans une application donnée.

L'extrémité des tuiles est, de la même manière que dans les figures 1 à 4, maintenue par des pièces annulaires 3 ou 22.

La disposition des pièces annulaires de maintien 3 et 4 ou 3 et 22 permet de produire des formes complexes de tuiles, formes adaptées à résoudre les problèmes liés au champ inducteur tournant.

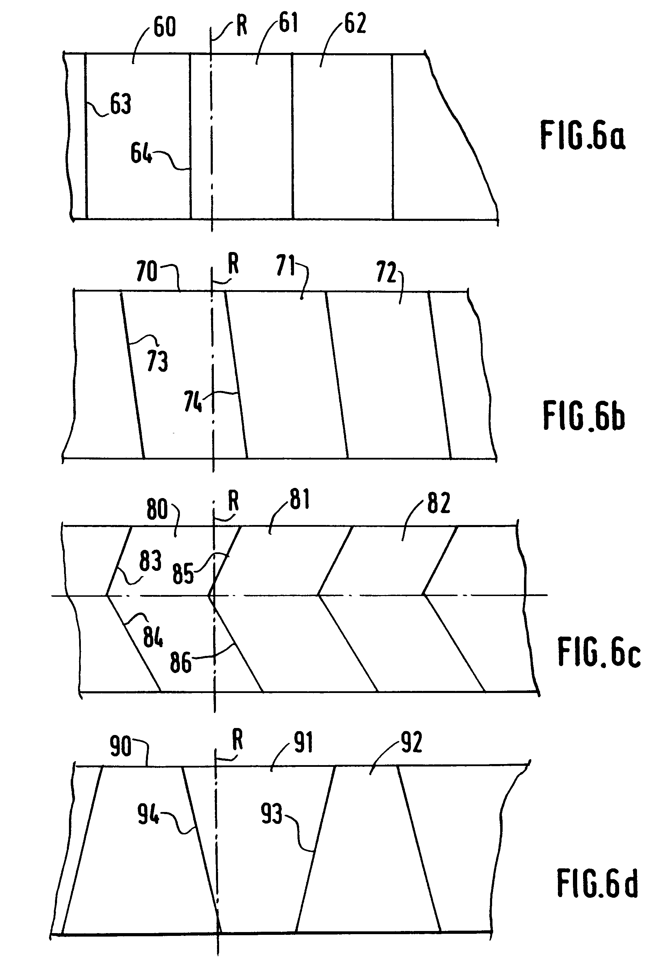

Aux figures 6a à 6d, on a représenté quatre exemples de formes de tuiles selon l'invention.

A la figure 6a, on a représenté un rotor "déplié" dans lequel une succession de tuiles parallélépipèdiques 60,61,62 s'étend autour du corps rotorique. Dans ce mode de réalisation, les bords longitudinaux 63,64 des tuiles sont alignés sur l'axe R de rotation du rotor.

A la figure 6b, on a représenté un rotor "déplié" dans lequel une sucession de tuiles en forme de losange 70,71,72 s'étend autour du corps rotorique. Dans ce mode de réalisation, les bords 73 et 74 de chaque tuile sont mutuellement parallèles et présentent une inclinaison par rapport à l'axe R de rotation du rotor.

A la figure 6c, on a représenté un rotor "déplié" dans lequel une succession de tuiles en forme de chevron 80,81,82 s'étend autour du corps rotorique. Dans ce mode de réalisation, les bords longitudinaux de chaque tuile présentent deux inclinaisons différentes 83 et 84 pour le premier bord longitudinal, 85 et 86 pour le second bord. Dans un mode de réalisation, les inclinaisons de ces bords sont symétriques par rapport au plan médian P du rotor. En particulier, les longueurs de tuile de part et d'autre de ce plan peuvent être égales. Dans une telle configuration, on conçoit que les tuiles du rotor sont en équilibre statique par leurs influences magnétiques mutuelles.

Dans un autre mode de réalisation, chaque tuile 80,81,82 est constituée par deux demi-tuiles en losange disposées symétriques disposées par rapport au plan médian P. Chaque demi-tuiles est tout à fait selon le mode de réalisation de la figure 6b. Dans ce cas, on dispose d'un anneau de frettage supplémentaire au niveau du plan médian P de façon à maintenir les extrémités aboutées des demi-tuiles.

A la figure 6d, on a représenté un rotor "déplié" dans lequel une succession de tuiles en forme de trapèzes 90,91,92 s'étend autour du corps rotorique. Dans ce mode de réalisation, les bords 93 et 94 de chaque tuile présentent des inclinaisons différentes. En particulier, les tuiles peuvent présenter des formes allant jusqu'à une forme en triangle.

Dans la description qui précède, on a surtout décrit le cas où les tuiles sont constituées par des secteurs de cylindre. Il est entendu que le rotor pouvant prendre une forme de cylindre à section polygonale, les tuiles qui y sont montées, peuvent notamment présenter une face d'appui plane et éventuellement aussi une face active.

D'autre part, en fonction des géométries du flux magnétique que l'on désire obtenir, les bords longitudinaux de deux tuiles successives du rotor sont séparés par un espace vide. Cette disposition, ainsi qu'on l'a vu notamment aux figures 7a à 7c, permet aussi l'application de l'invention.

La présente invention a été décrite pour un rotor intérieur à un stator. Dans d'autres modes de réalisation, le rotor est un rotor extérieur au stator. Il peut être en particulier de type rotor cloche. Dans ce cas, les pièces annulaires sont constituées par des anneaux disposés sur la surface intérieure des tuiles.

La présente invention n'est pas exclusive d'autres moyens de fixation sur le corps rotorique. En particulier, on peut réaliser un collage préalable des tuiles sur le rotor, la pose d'un ou plusieurs anneaux de frettage intervenant ultérieurement dans le procédé de montage du rotor.
Les moyens de maintien de l'invention, anneau, frettes, espaceurs, bras, etc sont réalisés en matériaux amagnétiques. En particulier, on peut les réaliser en matériaux plastiques, ou composites résistant à la température de fonctionnement de la machine magnétodynamique équipée du rotor.

## Revendications

**1)** Rotor pour machine magnéto-dynamique, du type comportant un corps rotorique (5) muni d'au moins une surface d'appui, du type comportant une pluralité d'aimants permanents en forme de tuiles dont une face est destinée à venir s'appuyer sur ladite surface d'appui (2, 8, 7, 9), les tuiles étant maintenues contre la surface d'appui du corps rotorique par au moins un anneau (3, 4) de maintien, dans au moins une zone, l'extrémité de chaque tuile (7, 8) comportant un logement (14, 15 ; 20, 23) destiné à recevoir une première partie cylindrique (12 ; 22) de l'anneau de maintien, la première partie cylindrique (12) de l'anneau de maintien (12, 16) étant fixée à la périphérie d'une seconde partie (16) de la pièce annulaire en forme de disque et servant à maintenir la pièce annulaire de maintien en rotation par rapport à l'axe de l'arbre tournant (6), caractérisé en ce que le disque (16) comporte une pluralité d'ergots (11) destinés à pénétrer dans des logements correspondants (10) de l'arbre tournant (6), ou du corps rotorique (5).

**2)** Rotor selon la revendication 1, caractérisé en ce que le disque (16) est constitué d'une pluralité de rayons (53) d'une roue (59) à rayons liée en rotation par rapport à l'axe de l'arbre tournant (6).

**3)** Rotor selon la revendication 2, caractérisé en ce que chaque aimant permanent présente un décrochement destiné à permettre le passage d'un rayon de la roue du disque de maintien (16) sur chaque bord d'aimant permanent qui se raccroche à l'extrémité en forme d'arc de l'aimant permanent.

**4)** Rotor selon la revendication 1, caractérisé en ce que la pièce annulaire (50) comporte aussi au moins un espaceur (52) disposé entre deux aimants successifs (56,57).

**5)** Rotor selon la revendication 4, caractérisé en ce qu'un espaceur (52) présente une face (58) dont l'inclinaison fait un angle (A) de façon à engendrer une face d'appui sur la tuile correspondante.

**6)** Rotor selon la revendication 4, caractérisé en ce qu'un espaceur (105) présente des bords (106,107) adaptés aux détalonnages des tuiles (101,103).

**7)** Rotor selon la revendication 1 ou 2, caractérisé en ce que la première partie cylindrique (13) de la pièce annulaire de maintien (4) est fixée à la périphérie d'une seconde partie de la pièce annulaire de maintien en forme de disque percé d'un trou de passage de l'arbre tournant (6).

**8)** Rotor pour machine magnéto-dynamique, du type comportant un corps rotorique (5) muni d'au moins une surface d'appui, du type comportant une pluralité d'aimants permanents en forme de tuiles dont une face est destinée à venir s'appuyer sur ladite surface d'appui (2, 8, 7, 9), les tuiles étant maintenues contre la surface d'appui du corps rotorique par au moins un anneau (3, 4) de maintien, dans au moins une zone, caractérisé en ce que les tuiles sont de forme parallélépipèdique dont les bords (33,34) longitudinaux présentent au moins une partie (73,74 ; 83-86 ; 93,94) qui n'est pas alignée sur l'axe de l'arbre de rotation (6) de façon à réduire l'effet d'encoche (42).

**9)** Rotor selon la revendication 8, caractérisé en ce que le bord longitudinal (33,34) présente une inclinaison correspondant au plus à un pas d'encoche de l'induit.

**10)** Rotor pour machine magnéto-dynamique, du type comportant un corps rotorique (5) muni d'au moins une surface d'appui, du type comportant une pluralité d'aimants permanents en forme de tuiles dont une face est destinée à venir s'appuyer sur ladite surface d'appui (2, 8, 7, 9), les tuiles étant maintenues contre la surface d'appui du corps rotorique par au moins un anneau (3, 4) de maintien, dans au moins une zone,, caractérisé en ce que au moins une des extrémités des tuiles (7) dépasse du corps rotorique (5) de façon à présenter un logement annulaire (26) entre la face intérieure (25) de chaque tuile (7) et l'arbre de rotation (6) pour y loger un capteur de position angulaire du rotor, comme un capteur à effet Hall, le capteur étant fixe par rapport au rotor.

**11)** Machine magnéto-dynamique, caractérisée en ce qu'elle comporte un rotor selon l'une des revendications précédentes.
